# NEUE EUROPÄISCHE PATENTSCHRIFT

(11) **EP 2 042 771 B2**
(45) Veröffentlichungstag und Bekanntmachung des Hinweises auf die Entscheidung über den Einspruch: **19.09.2018**
(45) Hinweis auf die Patenterteilung: 29.02.2012
(21) Anmeldenummer: 08016520.2
(22) Anmeldetag: 19.09.2008
(51) Int. Cl.: F16F 9/58

(54) **Schwingungsdämpfer mit einem Zuganschlag**
Vibration absorber with a buffer
Amortisseur d'oscillations doté d'une butée

(30) Priorität: 25.09.2007 DE 102007045892
(43) Veröffentlichungstag der Anmeldung: 01.04.2009
(73) Patentinhaber: ThyssenKrupp Bilstein GmbH, 58256 Ennepetal (DE)
(72) Erfinder: Fritz, Michael, 58339 Breckerfeld (DE); Klein, Uwe, 43269 Wuppertal (DE)
(74) Vertreter: Lorenz, Bernd Ingo Thaddeus

(56) Entgegenhaltungen:
- EP-A1- 1 591 690
- EP-A1- 1 593 874
- EP-A2- 1 741 953
- DE-A1- 10 021 762
- DE-A1-102005 009 213
- DE-B3- 10 344 102
- DE-B4- 4 408 405
- JP-A- 2005 016 632
- JP-B2- 4 254 984
- US-A1- 2006 049 014

## Beschreibung

Die Erfindung betrifft einen Schwingungsdämpfer für die Radaufhängung eines Kraftfahrzeuges mit einem mechanischen Zuganschlag, der durch eine als Schraubenfeder ausgebildete Zuganschlagfeder ausgebildet ist, die zwischen zwei Federtellern angeordnet ist. Die Enden der Zuganschlagfeder stützen sich dabei auf entsprechenden Stützflächen der Federteller ab.

Ein derartiger, die Merkmale des Oberbegriffs des Patentanspruchs 1 aufweisender Schwingungsdämpfer ist beispielsweise aus der DE 10 2005 009 213 A1 bekannt. Aus dieser Druckschrift ist es auch bekannt, dass es zu einem Ausknicken der Zuganschlagfeder in Richtung auf die Innenwand des Dämpferrohres kommen kann, insbesondere dann, wenn aus konstruktiven Gründen große Federwege vorgesehen werden müssen. Zur Vermeidung dieses unerwünschten Ausknickens der Zuganschlagfeder wird vorgeschlagen, den Innendurchmesser der Schraubenfederwindungen in einem mittleren Federabschnitt zu reduzieren, so dass das Ausknicken zur Kolbenstange hin erfolgt und sich die Zuganschlagfeder beim Ausknicken an die Kolbenstange einlegt. Dadurch wirkt die Kolbenstange als radiale Führung für die Zuganschlagleder. Nachteilig ist bei dieser Lösung, dass eine besondere Formgebung der Zuganschlagfeder erforderlich ist, um das gezielte Ausknicken nach innen, d.h. zur Kolbenstange hin, zu erreichen. Daher können keine einfacheren zylindrischen Federn eingesetzt Werden, die kostengünstiger in Herstellung sind. Nachteilig ist außerdem, dass die Kolbenstangenoberfläche von der Zuganschlagfeder beschädigt werden kann.

Neben dem in der DE 10 2005 009 213 A1 diskutierten Ausknicken der Zuganschlagfeder nach außen zum Dämpferrohr hin, so hat die Erfahrung gezeigt, kann es dann, wenn die Zuganschlagfeder aufgrund großer auf sie einwirkender Kräfte auf Block gefahren wird, zu einem Ineinanderschieben der einzelnen Windungen der als Schraubenfeder ausgebildeten Zuganschlagfeder kommen. Dabei weichen die Federwindungen in radialer Richtung nach innen oder außen aus, so dass dieses Ineinanderschieben der einzelnen Federwindungen zu plastischen Verformungen der Federführt, wenn die einwirkende Kraft groß genug ist. Die Funktion und die Dauerfestigkeit der Zuganschlagfeder sind dann nicht mehr gegeben. In Bezug auf dieses unerwünschte, ein technisches Versagen bewirkende plastische Verformen der Zuganschlagfeder sind in der DE 10 2005 009 213 A1 keine Gegenmaßnahmen offenbart.

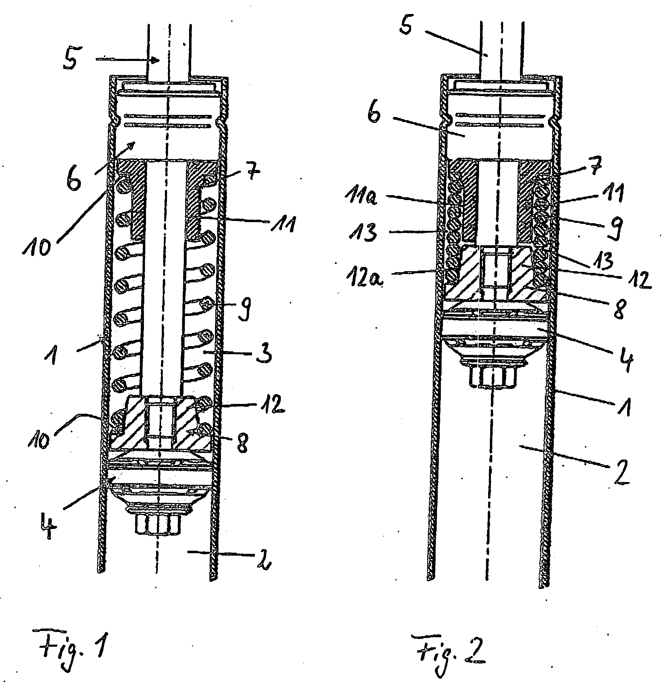

In der Druckschrift EP 1 591 690 A1 ist ein hydraulischer Schwingungsdämpfer für Kraftfahrzeuge beschrieben (siehe insbesondere Fig. 2 und zugehörige Beschreibung), bei dem sich die Zuganschlagfeder (compression coil spring 31) auf dem Flansch (flange 24a) eines Stützrohrs (support pipe 24) abstützt. Die Länge des Stützrohrs ist dabei gemäß Absatz 0033 dieser Druckschrift so bemessen, dass sie gleich groß oder größer ist als die minimale Länge der Zuganschlagfeder an ihrem elastischen Limit, d.h. bei Erreichen ihres Blockmaßes. Dies bedeutet, dass beim Gegenstand der EP 1 591 690 A1 die Zuganschlagfeder nicht über ihr Blockmaß hinaus belastet und zusammengedrückt werden kann. Denn entweder ist das Stützrohr länger als das Blockmaß der Feder, dann stützt sich das Stützrohr 24 ian dem Stopper 32 ab, bevor die Zuganschlagfeder überhaupt ihr Blockmaß erreicht hat. Oder das Stützrohr 24 ist genauso lang wie das Blockmaß der Zuganschlagfeder, dann kann die Zuganschlagfeder maximal ihr Blockmaß erreichen, jedoch nicht darüber hinaus belastet werden. In beiden Fällen werden alle Kräfte über das Stützrohr 24, den Stopper 32, den Gummipuffer 33 (rebound rubber 33) und das Verschlusselement (cylinder cover 13) abgeleitet. Auf die Zuganschlagfeder 31 können daher gar nicht die kritischen, Überbelastungen und plastische Verformungen hervorrufenden Kräfte einwirken.

Ein wichtiger Nachteil der aus der EP 1 591 690 A1 bekannten Konstruktion besteht darin, dass das Stützrohr 24 mit dem federtellerförmigen Flansch 24a sehr großen Belastungen ausgesetzt sein kann, wenn z.B. bei Fahrzeugen mit großem Gewicht und Offroad-Eigenschaften sehr große Zuganschlagkräfte beim Ausfedern der Schwingungsdämpfer auftreten. Daher muss das Stützrohr bei dieser Konstruktion aus einem Werkstoff bestehen, der die auftretenden Belastungen, Flächenpressungen und Spannungen ertragen kann, ohne sich plastisch zu Verformen. Denn zwischen der Kolbenstange und dem die Zuganschlagfeder abstützenden Federteller sind in der Praxis nur geringe Toleranzen zulässig, und eine plastische Verformung des Federtellers kann z.B. sehr schnell zu einer Beschädigung der Kolbenstange führen. Eine plastische Verformung des Federtellers auch bei sehr hohen Zuganschlagkräften beim Ausfedern des Fahrzeugs muss daher unbedingt vermieden werden. Werkstoffe mit geringem spezifischem Gewicht, wie z.B. Kunststoff oder Leichtmetall (z.B. Aluminium), die der Konstrukteur auf Gründen der Gewichtseinsparung gerne für den Federteller venwenden würde, können daher bei der aus der EP 1 591 690 A1 bekannten Konstruktion nicht eingesetzt werden.

Die DE 100 21 762 A1 stellt einen Stand der Technik dar, der nicht das technische Sachgebiet des vorliegenden Erfindungsgegenstands betrifft, sondern nur im weitesten Sinne dem technischen Gebiet der Dämpfung von Bewegungen von Bauteilen zuzuordnen ist. Diese Druckschrift offenbart einen Luftdämpfer für ein beweglich gelagertes Bauteil in einem Auto (z.B. eine Handschuhfachklappe). In dem Zylinder des Luftdämpfers ist eine Schraubenfeder angeordnet. Diese Schraubenfeder ist keine Zuganschlagfeder im Sinne der vorliegenden Erfindung, sondern sie soll dem Zylinder eine Vorzugsverstellrichtung verleihen. Zylinder und Kolben des aus der DE 100 21 762 A1 bekannten Luftdämpfers sind aus Kunststoffmaterial geformt.

In der DE 100 21 762 A1 wird das Problem behandelt, dass die vorgenannte, im Zylinderinnenraum angeordnete Feder einige Probleme, insbesondere Probleme akustischer Art erzeugen kann. Die Feder wird als relativ instabil bezeichnet, so dass bei ihrer Betätigung sehr schnell die Knickgrenze erreicht wird. Knickt die Feder aus, so erzeugt sie unerwünschte Klopf-, Reib- und Schwirrgeräusche. Um dieses zu vermeiden wird in der DE 100 21 762 A1 vorgeschlagen, dass an der Kolbenstange diametral längliche Rippen geformt sind, an welchen die Windungen der Feder anliegen, wenn diese entspannt ist. Die in der DE 100 21 762 A1 offenbarte Lösung ist auf das technische Gebiet der vorliegenden Erfindung, also auf das Gebiet der Schwingungsdämpfer für die Radaufhängungen von Kraftfahrzeugen mit mechanischen Zuganschlägen, nicht anwendbar, denn bei diesen Schwingungsdämpfern, die im Betrieb hohen Kräften ausgesetzt sind, ist die Kolbenstange stets als Metallstange mit einer (in der Regel hartverchromten) Mantelfläche ausgebildet. Das Anformen von länglichen Rippen an die Kolbenstange im Sinne der DE 100 21 762 A1 kommt daher nicht in Betracht.

Ausgehend von dem Stand der Technik der DE 10 2005 009 213 A1 liegt der Erfindung die Aufgabe zugrunde, einen Schwingungsdämpfer gemäß dem Oberbegriff des Patentanspruchs 1 derart weiterzubilden, dass eine plastische Verformung der Zuganschlagfeder auch dann sicher vermieden werden kann, wenn die Zuganschlagfeder in Folge sehr hoher auf sie einwirkender Kräfte auf Block gefahren und im Blockzustand noch weiter belastet wird. Gleichzeitig soll es möglich sein, die die Zuganschlagfeder abstützenden Federteller aus einem Werkstoff mit geringem spezifischem Gewicht zu fertigen und so Gewicht einzusparen.

Diese Aufgabe wird mit einem Schwingungsdämpfer mit den Merkmalen des Patentanspruchs 1 gelöst. Vorteilhafte Weiterbildungen sind in den Unteransprüchen angegeben.

Die Erfindung geht von der Erkenntnis aus, dass insbesondere bei Fahrzeugen mit großem Gewicht und Offroad-Eigenschaften sehr große Zugarischlagkräfte beim Ausfedern der Schwingungsdämpfer auftreten können. Es ist durchaus realistisch, dass die Zuganschlagkräfte bei solchen Fahrzeugen Werte von bis zu 45 kN und auch darüber hinaus annehmen können. Herkömmliche Zuganschlagfedern gehen jedoch in Abhängigkeit von ihrer Federrate bereits bei viel geringeren Kräften auf Block. Übliche Zuganschlagkräfte, die zu einem auf Block Fahren der Zuganschlagfedern führen, können z.B. im Bereich zwischen 2 und 6 kN liegen. Übersteigt eine auf die Feder einwirkende Zuganschlagkraft den Kraftwert, bei dem die Feder auf Block gefahren ist, so wirken diese Kräfte auf die auf Block gefahrene Feder ein. Dies kann dazu führen, dass die einzelnen Windungen der Zuganschlagfeder in radialer Richtung ausweichen, d.h. die Windungen schieben sich ineinander. Dadurch wird die Feder plastisch verformt, was zu einem Verlust der Funktion bzw. zu einem Versagen der Feder führt.

Ausgehend von der voranstehend dargelegten Erkenntnis wird erfindungsgemäß vorgeschlagen, die Federteller, auf denen sich die Enden der Zuganschlagfeder auf Stützflächen abstützen, zusätzlich zu diesen Stützflächen mit einer weiteren Funktionsfläche zu versehen, nämlich mit sich in axialer Richtung (d.h. in Längsrichtung des Schwingungsdämpfers) erstreckenden Stützhülsen, deren äußere Mantelflächen die Zuganschlagfeder radial nach innen komplett abstützen, wenn die Zuganschlagfeder auf Block gefahren wird oder ist. Die erfindungsgemäße Idee besteht also darin, eine zusätzliche Funktion, nämlich die Funktion des radialen Abstützens der Zuganschlagfeder von innen, in die die Zuganschlagfeder in axialer Richtung abstützenden Federteller zu integrieren. Erfindungsgemäß berühren die Stützhülsen einander nicht, wenn die Zuganschlagfeder auf Block gefahren ist, so dass alle auftretenden axialen Kräfte von der auf Block gefahrenen Zuganschlagfeder aufgenommen und über diese abgeleitet werden. Da die Zuganschlagfeder aus einem Stahlwerkstoff besteht, können von ihr in dem auf Block gefahrenen Zustand auch sehr hohe axiale Kräfte aufgenommen werden, da sie radial von innen durch die Stützhülsen abgestützt wird. Dadurch wird ein Ausknicken oder ein Ineinanderschieben der Federwindungen auch bei sehr hohen axialen Kräften verhindert.

Da die Stützhülsen der Federteller einander nicht berühren, wenn die Feder auf Block gefahren ist, werden keine axialen Kräfte durch die Stützhülsen aufgenommen. Die Federteller mit den Stützhülsen können daher vorteilhaft aus einem Werkstoff mit geringem spezifischem Gewicht bestehen, wie z.B. auch Kunststoff oder Aluminium.

Nach der Erfindung wird die axiale Erstrekkung der Stützhülsen so dimensioniert, dass die auf Block gefahrene Zugänschlagfeder im Wesentlichen über ihre gesamte Länge radial von innen durch die Mantelflächen der Stützhülsen abgestützt wird. Besonders effektiv wird die vorliegende Erfindung umgesetzt, wenn der Durchmesser der Zuganschlagfeder so bemessen wird, dass sie im entspannten Zustand nur einen relativ geringen Abstand von der Innenwand des Dämpferrohres aufweist. Gleichzeitig sind die Durchmesser der Stützhülsen so in Abhängigkeit vom Durchmesser der Zuganschlagfeder zu dimensionieren, dass eine radiale Abstützung der Zuganschlagfeder von innen gewährleistet ist, wenn die Zuganschlagfeder auf Block gefahren ist. Bei einer derartigen Dimensionierung der Zuganschlagfeder und der Stützhülsen zueinander entsteht im auf Block gefahrenen Zustand der Zuganschlagfeder ein gekapselter Ringraum, in dem die Zuganschlagfeder ausknicksicher und verformungssicher gehalten ist. Zu einem Ineinanderschieben der einzelnen Federwindungen und zu einer daraus resultierenden plastischen Verformung der Feder kann es daher nicht kommen.

Im Folgenden wird die Erfindung anhand einer Zeichnung näher erläutert. Im Einzelnen zeigen
- Fig. 1: einen Schwingungsdämpfer mit einem erfindungsgemäßen Zuganschlag im entspannten Zustand der Zuganschlagfeder in einem axialen Halbschnitt;
- Fig. 2: einen Schwingungsdämpfer mit einem erfindungsgemäßen Zuganschlag bei auf Block gefahrener Zuganschlagfeder in einem axialen Halbschnitt.

In Fig. 1 ist der erfindungsgemäße Zuganschlag in einem entspannten Zustand der Zuganschlagfeder 9 dargestellt. Die Zuganschlagfeder 9 stützt sich mit ihren beiden Enden auf Stützflächen 10 der Federteller 7, 8 ab. Der Federteller 7 stützt sich seinerseits auf der dem Arbeitsraum 3 zugewandten Oberfläche des Verschlusspaketes 6 ab und ist in axialer Richtung beweglich auf der Kolbenstange 5 angeordnet. Der andere Federteller 8 ist auf einen Gewindezapfen der Kolbenstange 5 aufgeschraubt und dadurch fest mit dieser verbunden. Alternativ kann der untere Federteller 8 auch auf den Kolbenstangenzapfen aufgesteckt und durch eine Kolbenmutter verklemmt werden oder durch Vercrimpung, durch einen Sprengring oder durch Verschweißung auf der Gleitbahn gesichert werden (diese Alternativen sind in den Figuren jedoch nicht dargestellt). Der Arbeitskolben 4 ist über eine Mutter auf einem Kolbenstangenzapfen befestigt.

Die Zuganschlagfeder 9 ist relativ zum Innendurchmesser des Dämpferrohres 1 so dimensioniert, dass im entspannten Zustand der Feder nur ein geringer Abstand zwischen der Zuganschlagfeder 9 und der Innenwandung des Dämpferrohres 1 vorhanden ist. Das vom Arbeitskolben 4 abgewandte Ende der Zuganschlagfeder 9 stützt sich in axialer Richtung auf einer Stützfläche 10 des Federtellers 7 ab. Gleichzeitig weist der Federteller 7 eine sich in Längsrichtung des Schwingungsdämpfers erstreckende Stützhülse 11 auf. Der Durchmesser der Stützhülse 11 ist dabei relativ zu dem Durchmesser der Zuganschlagfeder 9 so dimensioniert, dass die äußere Mantelfläche 11a der Stützhülse 11 die Zuganschlagfeder 9 radial von innen abstützt, wenn die Zuganschlagfeder 9 auf Block gefahren ist (vgl. Fig. 2).

Das Gleiche gilt für die Stützhülse 12 des dem Arbeitskolben 4 zugeordneten Federtellers 8. Auch der Federteller 8 weist eine sich in Längsrichtung des Schwingungsdämpfers erstreckende Stützhülse 12 auf, deren Mantelfläche 12a die Zuganschlagfeder 9 von innen radial abstützt, wenn die Feder auf Block gefahren ist (vgl. Fig. 2). Im dargestellten Ausführungsbeispiel ist die Mantelfläche 12a nicht einfach zylindrisch ausgebildet, wie die Mantelfläche 11a des Federtellers 7, sondern sie weist eine leicht konische Form auf. Ausgehend von der Stützfläche 10 des Federtellers 8, auf der sich das Ende der Zuganschlagfeder 9 abstützt, verjüngt sich in axialer Richtung der Durchmesser der Stützhülse 12. Diese konische Form der Mantelfläche 12a erleichtert das Einführen der Stützhülse 12 in die Zuganschlagfeder 9 und verhindesrt ein Verklemmen der Zuganschlagfeder 9 auf der Stützhülse 9.

Die Durchmesser der Stützhülsen 11 und 12 der Federteller 7, 8 und der Durchmesser der Zuganschlagfeder 9 sind so dimensioniert, dass bei auf Block gefahrener Zuganschlagfeder 9 zwischen der Innenwand des Dämpferrohres 1 und den Mantelflächen 11a, 12a der Stützhülsen 11, 12 ein gekapselter Ringraum 13 ausgebildet ist, in dem die Zuganschlagfeder 9 ausknicksicher und verformungssicher gehalten ist. Durch die gekapselte Anordnung der auf Block gefahrenen Zuganschlagfeder 9 in dem Ringraum 13 wird sicher vermieden, dass einzelne Windungen der Zuganschlagfeder 9 bei Einwirkung von hohen Kräften in radialer Richtung ausweichen und ineinander geschoben werden können. Auf diese Weise wird eine plastische Verformung der Zuganschlagfeder 9 audi dann sicher verhindert, wenn die auf die Zuganschlagfeder einwirkenden Kräfte die Kraft, bei der die Zuganschlagfeder 9 auf Block geht, um ein Vielfaches übersteigen.

In Fig. 2 ist, wie bereits vorstehend erwähnt, der auf Block gefahrene Zustand der Zuganschlagfeder 9 dargestellt. Es ist gut zu erkennen, dass die Stützhülsen 11, 12 einander nicht berühren. Die hohen axialen Kräfte werden daher nicht über die Stützhülsen 11, 12 aufgenommen und abgeleitet, sondern über die auf Block gefahrene Zuganschlagfeder 9. Dadurch kann es nicht zu einer plastischen Verformung der Stützhülsen 11, 12 aufgrund der axialen Kräfte kommen. Die Federteller 7, 8 können daher aus einem Werkstoff gefertigt sein, der ein wesentlich geringeres spezifisches Gewicht aufweist als Stahl. Insbesondere können Leichtbauwerkstoffe wie Kunststoff oder Leichtmetall (wie z.B. Aluminium) zu Herstellung der Federteller 7, 8 verwendet werden, so dass Gewicht eingespart werden kann.

### Bezugszeichenliste

- 1.: Dämpferrohr
- 2.: Arbeitsraum
- 3.: Arbeitsraum
- 4.: Arbeitskolben
- 5.: Kolbenstange
- 6.: Verschlusspaket
- 7.: Federteller
- 8.: Federteller
- 9.: Zuganschlagfeder
- 10.: Stützfläche
- 11.: Stützhülse
- 11a.: Mantelfläche
- 12.: Stützhülse
- 12a.: Mantelfläche
- 13.: gekapselter Ringraum

## Patentansprüche

1. Schwingungsdämpfer für die Radaufhängung eines Kraftfahrzeuges, mit einem Dämpferrohr (1), einem den Innenraum des Dämpferrohres (1) in zwei Arbeitsräume (2, 3) unterteilenden Arbeitskolben, der an einer Kolbenstange (5) befestigt ist, einem ein offenes Ende des Dämpferrohres (1) verschließenden Verschlusspaket (6), durch das die Kolbenstange (5) hindurchgeführt ist, und mit einer zwischen zwei Federtellern (7, 8) angeordneten, als Schraubenfeder ausgebildeten Zuganschlagfeder (9), wobei sich die Enden der Zuganschlagfeder (9) auf Stützflächen (10) der Federteller (7, 8) abstützen, **dadurch gekennzeichnet, dass** die Federteller (7, 8) sich in Längsrichtung des Schwingungsdämpfers erstreckende Stützhülsen (11, 12) aufweisen, deren äußere Mantelflächen (11a, 12a) die Zuganschlagfeder (9) von innen in radialer Richtung abstützen, wenn die Zuganschlagfeder (9) auf Block gefahren ist, wobei die Stützhülsen (11, 12) im auf Block gefahrenen Zustand der Zuganschlagfeder (9) einander nicht berühren,
**dadurch gekennzeichnet, dass** die axialen Erstreckungen der Stützhülsen (11, 12) so dimensioniert sind, dass dann, wenn die Zuganschlagfeder auf Block gefahren ist, eine Abstützung über die gesamte Länge der Zuganschlagfeder durch die Stützhülsen (11,12) gegeben ist.

2. Schwingungsdämpfer nach Anspruch 1, **dadurch gekennzeichnet, dass** der Durchmesser der Zuganschlagfeder (9) relativ zum Durchmesser des Dämpferrohres (1) und die Durchmesser der Stützhülsen (11, 12) relativ zum Durchmesser der Zuganschlagfeder (9) so bemessen sind, dass sich im auf Block gefahrenen Zustand der Zuganschlagfeder (9) ein Ringraum (13) bildet, in dem die Zuganschlagfeder (9) ausknicksicher und verformungssicher angeordnet ist.

## Claims

1. Vibration damper for the wheel suspension of a motor vehicle, having a damper tube (1), a working piston dividing the interior of the damper tube (1) into two working chambers (2, 3) and being attached to a piston rod (5), a closure assembly (6) closing an open end of the damper tube (1) and having the piston rod (5) passing therethrough, and having a traction stop spring (9) which is formed as a helical spring and is disposed between two spring plates (7, 8), wherein the ends of the traction stop spring (9) are supported on support surfaces (10) of the spring plates (7, 8), **characterised in that** the spring plates (7, 8) comprise support sleeves (11, 12) extending in the longitudinal direction of the vibration damper, the outer peripheral surfaces (11a, 12a) of the support sleeves supporting the traction stop spring (9) in the radial direction from the inside when the traction stop spring (9) has reached a hard stop, wherein the support sleeves (11, 12) do not contact each other when the traction stop spring (9) has reached a hard stop, **characterised in that** the axial extensions of the support sleeves (11, 12) are sized such that when the traction stop spring (9) has reached a hard stop, support is provided by the support sleeves (11, 12) over the entire length of the traction stop spring.

2. Vibration damper as claimed in Claim 1, **characterised in that** the diameter of the traction stop spring (9) relative to the diameter of the damper tube (1) and the diameters of the support sleeves (11, 12) relative to the diameter of the traction stop spring (9) are sized such that when the traction stop spring (9) has reached a hard stop, an annular space (13) is formed in which the traction stop spring (9) is disposed in such a manner as to be secured against buckling and deformation.

## Revendications

1. Amortisseur d'oscillations pour la suspension des roues d'un véhicule automobile, avec un tube d'amortisseur (1), un piston de travail, qui, divisant l'espace intérieur du tube d'amortisseur (1) en deux chambres de travail (2, 3), est fixé à une tige de piston (5), un paquet de fermeture (6), qui ferme une extrémité ouverte du tube d'amortisseur (1) et est traversé par la tige de piston (5), et avec un ressort amortisseur de traction (9), qui, réalisé sous la forme d'un ressort à boudin, est disposé entre deux coupelles de ressort (7, 8), sachant que les extrémités du ressort amortisseur de traction (9) s'appuient sur des surfaces de support (10) des coupelles de ressort (7, 8), **caractérisé en ce que** les coupelles de ressort (7, 8) sont dotées de douilles de support (11, 12), qui s'étendent dans la direction longitudinale de l'amortisseur d'oscillations et dont les surfaces extérieures (11a, 12a) soutiennent, de l'intérieur, le ressort amortisseur de traction (9), dans la direction radiale, quand ledit ressort amortisseur de traction (9) est en fin de course, sachant que les douilles de support (11, 12) ne se touchent pas, quand le ressort amortisseur de traction (9) est en fin de course **caractérisé en ce que** les étendues axiales des douilles de support (11, 12) sont dimensionnées de sorte qu'un soutien soit effectué par les douilles de support (11, 12) sur toute la longueur du ressort amortisseur de traction, quand ledit ressort amortisseur de traction (9) est en fin de course.

2. Amortisseur d'oscillations selon la revendication 1, **caractérisé en ce que** le diamètre du ressort amortisseur de traction (9) est dimensionné par rapport au diamètre du tube d'amortisseur (1) et le diamètre des douilles de support (11, 12) est dimensionné par rapport au diamètre du ressort amortisseur de traction (9), de sorte que, quand le ressort amortisseur de traction (9) est en fin de course, soit formé un espace annulaire (13), dans lequel le ressort amortisseur de traction (9) est disposé en étant protégé contre un flambage et une déformation.
